(19) Europäisches Patentamt

European Patent Office

Office européen des brevets

(11) Veröffentlichungsnummer: **0 504 591 A2**

## (12) EUROPÄISCHE PATENTANMELDUNG

(21) Anmeldenummer: **92102552.4**

(22) Anmeldetag: **15.02.92**

(51) Int. Cl.5: **H04N 7/18**, F16L 55/26, G01N 21/00, G01M 3/00

(30) Priorität: **22.03.91 DE 9103527 U**

(43) Veröffentlichungstag der Anmeldung:
**23.09.92 Patentblatt 92/39**

(84) Benannte Vertragsstaaten:
**AT BE CH DE FR LI LU NL**

(71) Anmelder: **Denso-Chemie Wedekind KG**
**Felderstrasse 24**
**W-5090 Leverkusen(DE)**

(72) Erfinder: **Baur, Fritz**
**Mittelstrasse 4**
**W-5419 Urbach(DE)**

(74) Vertreter: **Langmaack, Jürgen, Dipl.-Ing. et al**
**Patentanwälte Maxton, Alfred, Dipl.-Ing.**
**Langmaack, Jürgen, Dipl.-Ing.**
**Goltsteinstrasse 93 VII Postfach 51 08 06**
**W-5000 Köln 51(DE)**

(54) **Vorrichtung zum Erfassen von Fugen, Rissen oder dgl. in Abwasserleitungen.**

(57) Es wird eine Vorrichtung zum Erfassen von Fugen, Rissen oder dgl. in nicht begehbaren Abwasserleitungen vorgeschlagen, die ein mit einem Antrieb versehenes Fahrwerk (5) aufweist, mit dem eine Video-Kamera (6) verbunden ist. Hierbei ist die Video-Kamera (6) mit radial zur Längsachse ausgerichteter Optik am Fahrwerk (5) um die Fahrwerklängsachse mittels eines fernsteuerbaren Schwenkantriebes schwenkbar angeordnet und ein Drehwinkelgeber zur Erfassung des Schwenkwinkels mit der Video-Kamera verbunden, der an eine Anzeigeeinrichtung angeschlossen ist. Da die Video-Kamera mit einer Zieleinrichtung (18) zur Erfassung der Kamerastellung in bezug auf das Objekt (13, 14, 16) in Verbindung steht, kann jede Fuge oder jeder Riß in bezug auf Länge und/oder Breite vermessen werden, um die notwendigen Abdichtungsmaßnahmen bzw. die Abmessungen einzubringender Dichtungen bestimmen zu können.

EP 0 504 591 A2

Die Erfindung betrifft eine Vorrichtung zum Erfassen von Fugen, Rissen oder dgl. in Abwasserleitungen, die ein mit einem Antrieb versehenes Fahrwerk aufweist, mit dem eine Video-Kamera verbunden ist.

Mit den Vorrichtungen der eingangs bezeichneten Art ist es möglich, nicht begehbare Abwasserleitungen zu inspizieren und auf Schäden zu untersuchen. Der Antrieb des Fahrwerks erfolgt über einen Antriebsmotor, der über eine Schleppleitung von außen versorgt wird. Das von der Video-Kamera aufgenommene Bild wird über eine mit der Schleppleitung verbundene Übertragungsleitung ebenfalls nach außen übertragen und kann über einen an der Oberfläche beispielsweise in einem Fahrzeug aufgestellten Monitor erfaßt werden. Es hat sich nun herausgestellt, daß die rein optische Erfassung etwa vorhandener Schäden nicht ausreicht, da in zunehmendem Maße bereits verlegte Rohrleitungen saniert werden müssen, wobei sowohl in die vorhandenen Stoßfugen bei den üblicherweise aus Beton hergestellten Rohrleitungen von innen her neue Dichtungen eingesetzt werden müssen und darüber hinaus vorhandene Risse im Rohrkörper selbst erfaßt und ausgebessert werden müssen. Während es für das Vergießen von Fugen oder Rissen für die Dokumentation ausreicht, wenn die jeweilige Lage der Schadensstelle erfaßt wird, ist dies insbesondere für die Sanierung von Stoßfugen mit Preßdichtungen aus elastischen Werkstoffen nicht ausreichend. Hierzu ist es vielmehr erforderlich die Breite der vorhandenen Fuge und das notwendige Maß einer Fugenbearbeitung genau zu messen.

Der Erfindung liegt die Aufgabe zugrunde, eine Vorrichtung der eingangs bezeichneten Art so zu verbessern, daß eine maßgenaue Erfassung der Abmessungen von Fugen, Rissen oder dgl. möglich ist.

Diese Aufgabe wird erfindungsgemäß dadurch gelöst, daß die Video-Kamera mit radial zur Längsachse ausgerichteter Optik am Fahrwerk um die Fahrwerkslängsachse mittels eines fernsteuerbaren Schwenkantriebes verschwenkbar angeordnet ist und daß ein Drehwinkelgeber zur Erfassung des Schwenkwinkels mit der Video-Kamera in Verbindung steht, der an eine Anzeigeeinrichtung angeschlossen ist, und daß die Video-Kamera mit einer Zieleinrichtung zur Erfassung der Kamerastellung in Bezug auf das Objekt in Verbindung steht. Mit Hilfe einer derartigen Vorrichtung ist es möglich, innerhalb einer im Erdreich verlegten, nicht begehbaren Rohrleitung, beispielsweise eine Stoßfuge genau auszumessen. Hierbei kann der Abstand der jeweils gemessenen Stoßfuge vom Schacht über das Zuleitungskabel grob festgelegt werden. Sobald die Video-Kamera über das Fahrwerk in Position gebracht ist, kann dann die Video-Kamera mit ihrer Zieleinrichtung genau auf eine Kante der zu erfassenden Fuge eingestellt werden, so daß dann die Breite der Fuge über die Zieleinrichtung abgegriffen werden kann. Durch die schwenkbare Ausbildung der Video-Kamera kann beispielsweise eine Stoßfuge in ihrem gesamten Umfangsverlauf erfaßt werden, wobei insbesondere auch auf den Umfang bezogene Abweichungen in der Fugenbreite sowohl hinsichtlich ihrer Breitenveränderung als auch hinsichtlich ihrer Position in Bezug auf einen Ausgangspunkt, beispielsweise die Rohrsohle genau festlegbar ist. Durch diese genaue Vermessung einer vollständigen Stoßfuge ist es möglich zu entscheiden, ob die Fuge überhaupt mit einer Preßdichtung aus elastischem Material zu sanieren ist, mit welcher Strangdicke gearbeitet werden muß und ob und in welchem Maße beispielsweise die Stoßfuge durch einen Fräsvorgang vorgearbeitet werden muß.

Über den Drehwinkelgeber können hierbei Abweichungen in Bezug auf den Umfang praktisch auf den Millimeter genau ausgemessen werden. Als Zieleinrichtung kann entweder auf dem Monitor eine entsprechende Markierung vorgesehen werden, die als "Null-Lage" für die anzufahrende Fugenkante dient, oder aber es kann in der Optik der Kamera ein Fadenkreuz mit einer Meßteilung vorgesehen sein, das hier über die Kamera die Maßerfassung ermöglicht. Der wegfühlende Geber kann hierbei als Analoggeber ausgebildet sein, bevorzugt ist jedoch ein digital arbeitender Geber, da dieser über eine entsprechende Zählelektronik die unmittelbare Umsetzung in die digitale Anzeige des von der Kamera zurückgelegten Schwenkwinkels möglich macht. Wird nun die Kamera um die Längsachse verschwenkt, so läßt sich bei gleichzeitiger Magnetaufzeichnung des Bildes später die Breite der Fuge vom Monitor abgreifen. Hierbei ist jedoch zu berücksichtigen, daß bei feststehendem Maßstab in der Kameraoptik der sich bei unterschiedlichen Rohrdurchmessern ergebende unterschiedliche Abbildungsmaßstab mit einzurechnen ist. Dies kann dadurch ausgeglichen werden, wenn die Kameraoptik als Zoomoptik ausgebildet ist, wobei der jeweilige Rohrdurchmesser bzw. Rohrradius unmittelbar auf die Optik eingestellt wird, so daß sich ein fester Abbildungsmaßstab, z. B. der Maßstab 1:1, vorgeben läßt.

Besonders zweckmäßig ist es jedoch, wenn mit der Kamera ein in seiner Länge einstellbarer Arm verbunden ist, an dessen Ende im Blickfeld der Kamera ein in Rohrlängsrichtung ausgerichteter Maßstab angeordnet ist. Der Arm kann so eingestellt werden, daß der Maßstab in geringem Abstand zur Rohrwandung steht. Er liegt dann voll im Licht des Scheinwerfers, so daß dann die Fugenbreite unmittelbar abgelesen oder über eine Magnetaufzeichnung registriert werden kann. Änderungen im Abbildungsmaßstab der Optik sind daher unbeachtlich.

In zweckmäßiger Ausgestaltung der Erfindung ist vorgesehen, daß die Video-Kamera auf dem Fahrwerk in Längsrichtung mittels eines fernsteuerbaren Antriebsschlittens auf einer Führung verschiebbar geführt ist, daß der Antriebsschlitten mit einem wegfühlenden Geber versehen ist, der die Position des Antriebsschlittens auf der Führung erfaßt und der mit einer Anzeigeeinrichtung in Verbindung steht. Mit Hilfe dieser Ausgestaltung ist es möglich, die Fugenbreite über den Antriebsschlittens "abzufahren" und hierbei den zurückgelegten Weg über den wegfühlenden Geber zu registrieren. Auch hier kann die Zieleinrichtung entweder auf dem Monitor fest vorgegeben oder in die Kameraoptik eingebaut sein, so daß eine Längsbewegung von einer Fugenkante zur anderen durchgeführt wird. Über den Schwenkvorgang können dann Abweichungen über den Rohrumfang ebenfalls festgehalten werden. Die vom Weggeber abgegebenen Meßwerte können gesondert angezeigt oder direkt in den Monitor eingeblendet werden, so daß sie bei einer Magnetaufzeichnung des Bildes mit aufgezeichnet werden und damit auch dokumentiert sind. Mit einer derart ausgebildeten Vorrichtung ist es aber auch möglich, durch Überlagerung der Längsbewegung der Kamera mit der Schwenkbewegung der Kamera nicht nur in Umfangsrichtung verlaufende Fugen oder Risse, sondern auch in Längsrichtung oder schräg, d. h. schraubenlinienförmig oder in ähnlicher Weise entlang der Rohrinnenwandung verlaufende Risse zu erfassen und genau auszumessen. Zweckmäßig ist hierbei, wenn die Längswegmessung und die Drehwinkelmessung nicht nur optisch angezeigt werden, sondern wenn beispielsweise mit Hilfe eines angeschlossenen Rechners die Daten gespeichert und dann aus den gespeicherten Daten mit Hilfe eines Plotters aufgezeichnet werden. Dem Rechner ist dann lediglich die Nennweite des Rohres vorzugeben. Es können hier auch die von modernen Werkzeugmaschinen bekannten wegfühlenden Geber eingesetzt werden.

In zweckmäßiger weiterer Ausgestaltung der Erfindung ist vorgesehen, daß die Führung für die Kamera am Fahrwerk quer zur Rohrachse des zu überprüfenden Rohres einstellbar angeordnet ist. Hierdurch ist es möglich, für unterschiedliche Rohrdurchmesser die Führung jeweils so zu verstellen, daß sie praktisch genau dem Verlauf der Rohrachse entspricht, so daß nicht nur die Erfassung des Längsweges auf der Führung, sondern auch die maßliche Bestimmung von Fingen, Rissen oder dgl. in Umfangsrichtung mit hinreichender Genauigkeit möglich ist, da durch diese Maßnahme die Rohrachse mit der Drehachse der Video-Kamera zusammenfällt und somit ein gleichbleibender Abbildungsmaßstab bzw. ein gleicher Abstand des festen Maßstabes gewährleistet ist.

In weiterer vorteilhafter Ausgestaltung der Erfindung ist vorgesehen, daß das Fahrwerk mit einer fernsteuerbaren Feststelleinrichtung versehen ist. Hierdurch ist es möglich, das Fahrwerk im Rohr vor der Einleitung des Meßvorganges festzusetzen, so daß hier durch Wasserströmungen etc. keine Längsverschiebungen mehr erfolgen können.

In zweckmäßiger Ausgestaltung der Erfindung ist ferner vorgesehen, daß das Fahrwerk mit einer an die Rohrwandung zumindest im Bereich der Rohrsohle anlegbaren Staueinrichtung versehen ist. Hierdurch ist es möglich, kurzfristig den von der Kamera zu überstreichenden Wandungsbereich gegenüber dem im Rohr abfließenden Wasser abzusperren und trockenfallen zu lassen.

Die Erfindung wird anhand einer schematischen Zeichnung eines Ausführungsbeispieles näher erläutert.

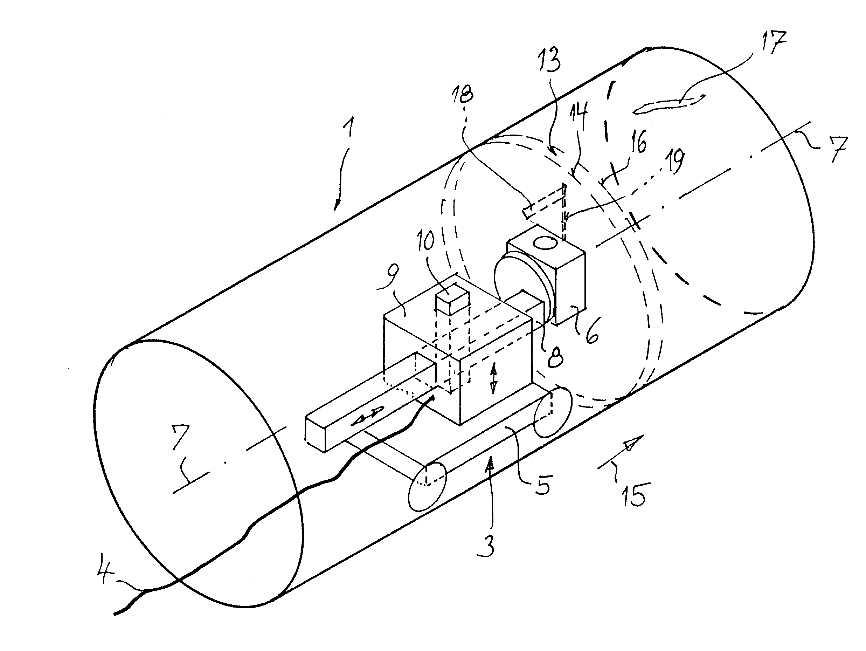

In der Zeichnung ist eine nicht begehbare Abwasserleitung 1 im Schnitt dargestellt, in die über einen Einstiegsschacht in üblicher Weise eine Vorrichtung 3 zur optischen Kontrolle der Rohrleitung eingelassen ist. Die Vorrichtung 3 steht über ein Versorgungs- und Steuerkabel 4 mit einem hier nicht näher dargestellten Werkstatt-Fahrzeug in Verbindung.

Die Vorrichtung 3 besteht im wesentlichen aus einem mit einem fernsteuerbaren Antrieb, beispielsweise einem Elektromotor versehenen Fahrwerk 5, an dem eine Video-Kamera 6 mit integriertem Scheinwerfer befestigt ist. Die Video-Kamera ist an einem Schlitten 8 befestigt, der in einer Führung 9 in Richtung der Rohrlängsachse 7 hin und her bewegbar ist. Die Führung 9 ist hierbei ihrerseits über einen Ständer 10 senkrecht zur Fahrwerksebene auf und ab bewegbar, so daß die Video-Kamera mit einer vorgegebenen Bezugslinie auf die Längsachse des zu untersuchenden Rohrstranges einstellbar ist. Die Video-Kamera ist an dem Antriebsschlitten 8 um die Längsachse verschwenkbar befestigt und zwar in der Weise, daß die Optik nahezu um 360° verschwenkbar ist und hierbei den Rohrumfang abtasten kann. Die Schwenkachse ist hierbei zweckmäßigerweise so positioniert, daß sie mit der Längsachse des Antriebsschlittens 8 zusammenfällt, so daß bei einer entsprechenden Positionierung des Antriebsschlittens 8 sowohl die Längsbewegung als auch die Schwenkbewegung auf die Rohrachse 7 bezogen sind.

Zwischen dem Antriebsschlitten 8 einerseits und der Führung 9 andererseits ist nunmehr ein wegfühlender Geber angeordnet, der beispielsweise als Impulsgeber so ausgebildet ist, daß über seine Elektronik die gezählten Impulse unmittelbar in Milimetern angezeigt werden. Die Übertragung der Längsbewegung auf den Impulsgeber, der entweder linear oder als abrollender Drehwinkelgeber ausgebildet sein kann, muß schlupffrei erfolgen. Dieser kann auch mit dem in der Führung 9 angeordneten Antrieb des Antriebs für den Antriebsschlitten 8 gekoppelt sein.

Die Video-Kamera 6 ist ebenfalls mit einem fernsteuerbaren Schwenkantrieb gegenüber dem Antriebsschlitten 8 fernsteuerbar verschwenkbar, wobei auch hier ein vorzugsweise als Impulsgeber ausgebildeter Drehwinkelgeber die genaue Schwenkstellung der Kamera gegenüber einer vorgegebenen Null-Lage, beispielsweise Ausrichtung der Optik gegen die Rohrsohle d. h. senkrecht nach unten, oder Ausrichtung der Optik gegen den Rohrscheitel, d. h. senkrecht nach oben, vorgegeben werden kann.

Am Fahrwerk 5 ist ferner eine Staueinrichtung angeordnet, die beispielsweise aus einer Gummischürze, einem aufblasbaren Hohlkörper oder dgl. besteht, und die über einen entsprechenden - hier nur schematisch angedeuteten - Antrieb gegen die Rohrsohle angedrückt werden kann. Hierdurch wird erreicht, daß für den jeweiligen Meßvorgang die Bodensohle kurzfristig abgesperrt werden kann, so daß das zu untersuchende Feld trockenfallen kann und die Fuge im Sohlenbereich ausgemessen werden kann.

Für den Meßvorgang wird die Vorrichtung 3 zunächst in üblicher Weise über den eigenen Fahrantrieb in den Abwasserkanal eingefahren, wobei der Abstand zum Schacht über Längenmarkierungen an der Versorgungsleitung 4 grob erfaßt werden kann. Soll nun eine Stoßfuge 13 überprüft und ausgemessen werden, dann wird die Vorrichtung 3 soweit in den Kanal verfahren, bis auf dem Monitor im Versorgungsfahrzeug die Fuge erscheint. Nunmehr wird mit Hilfe einer Zielpunkteinrichtung, die beispielsweise in Form eines Fadenkreuzes in die Optik der Kamera eingebaut werden kann oder aus einer entsprechenden festen Markierung auf dem Monitor bestehen kann, die Video-Kamera soweit verfahren, daß die Fugenkante 14 mit der Zielrichtung zusammenfällt. Das vom wegfühlenden Geber angezeigte Verschiebungsmaß des Antriebsschlittens 8 gegenüber dem Fahrwerk 5 wird als Null-Lage erfaßt und anschließend über den eigenen Antrieb der Führungsschlitten 8 soweit in Richtung des Pfeiles 15 verfahren, bis die andere Fugenkante 16 mit der Zielrichtung zusammenfällt. Die angezeigte Längendifferenz ergibt für die gegebene Kameraeinstellung die Fugenbreite.

Ist jedoch - wie gestrichelt eingezeichnet - ein fester Maßstab 18 über einen längenverstellbaren Arm 19 vorgesehen, der zusammen mit der Kamera 6 verschwenkbar ist, dann braucht die Fugenbreite nur abgelesen zu werden.

Um nun die Fuge über ihren Umfangsbereich kontrollieren und auch ausmessen zu können, kann nun zum einen die Zieleinrichtung auf die Fugenkante 14 eingestellt werden und dann die Kamera um die Längsachse verschwenkt werden, wobei entsprechende Abweichungen in der Neigung der Fuge durch die Überlagerung von Längsbewegungen mit erfaßt und aufgezeichnet werden. Nachdem so der exakte Verlauf der Fugenkante 14 erfaßt ist, kann der gleiche Vorgang für die Fugenkante 16 wiederholt werden, so daß dann auch der Verlauf der Fugenbreite über den Umfang festliegt. Die Meßergebnisse können, da sie zweckmäßigerweise über die digitalen Geber, beispielsweise Impulsgeber, erzeugt werden, über einen Rechner erfaßt und so umgesetzt werden, daß beispielsweise über einen Plotter die Fuge in jedem beliebigen Abbildungsmaßstab in ihrer tatsächlichen Kontur aufgezeichnet werden kann.

Da bei einer derart ausgebildeten Vorrichtung eine Überlagerung einer Längenmessung und einer Winkelmessung möglich ist, können auch in Längsrichtung verlaufende Risse 17 in der Rohrwandung in Verlauf und Breitenkontur exakt ausgemessen und in ihrer Position im Rohr sowohl in Längsrichtung als auch in Umfangsrichtung festgehalten werden.

Um Verschiebungen des Fahrwerks 5 während des Meßvorganges zu vermeiden, ist dieses zweckmäßigerweise mit einer Feststelleinrichtung in Form einer auf die Räder oder den Fahrantrieb wirkenden Bremse oder in Form einer auf die Rohrwandung wirkenden Spreizeinrichtung versehen.

**Patentansprüche**

1. Vorrichtung zum Erfassen von Fingen, Rissen oder dgl. in Abwasserleitungen, die ein mit einem Antrieb versehenes Fahrwerk aufweist, mit dem eine Video-Kamera verbunden ist, **dadurch gekennzeichnet**, daß die Video-Kamera (6) mit radial zu Längsachse ausgerichteter Optik am Fahrwerk (5) um die Fahrwerklängsachse mittels eines fernsteuerbaren Schwenkantriebes verschwenkbar angeordnet ist, daß ein Drehwinkelgeber zur Erfassung des Schwenkwinkels mit der Video-Kamera in Verbindung steht, der an eine Anzeigeeinrichtung angeschlossen ist und daß die Video-Kamera mit einer Zieleinrichtung (18) zur Erfassung der Kamerastellung in Bezug auf das Objekt (13, 14, 16) in Verbindung steht.

2. Vorrichtung nach Anspruch 1, dadurch gekennzeichnet, daß mit der Video-Kamera (6) ein in seiner Länge einstellbarer Arm (19) verbunden ist, an dessen Ende im Blickfeld der Kameraoptik ein in Rohrlängsrichtung ausgerichteter Maßstab (18) angeordnet ist.

3. Vorrichtung nach Anspruch 1 oder 2, dadurch gekennzeichnet, daß die Video-Kamera (6) auf dem Fahrwerk (5) in Längsrichtung mittels eines fernsteuerbaren Antriebsschlittens (8) auf einer Führung (9) verschiebbar geführt ist, daß der Antriebsschlitten (8) mit einem wegfühlenden Geber versehen ist, der die Position des Antriebsschlittens auf der Führung erfaßt und der mit einer Anzeigeeinrichtung in Verbindung steht.

4. Vorrichtung nach einem der Ansprüche 1 bis 3, dadurch gekennzeichnet, daß die Führung (9) für die Video-Kamera (6) am Fahrwerk (5) quer zur Rohrachse des zu überprüfenden Rohres (1) einstellbar angeordnet ist.

5. Vorrichtung nach einem der Ansprüche 1 bis 4, dadurch gekennzeichnet, daß das Fahrwerk (5) mit einer fernsteuerbaren Feststelleinrichtung versehen ist.

6. Vorrichtung nach einem der Ansprüche 1 bis 5, dadurch gekennzeichnet, daß das Fahrwerk (5) mit einer an die Rohrwandung zumindest im Bereich der Rohrsohle anlegbaren Staueinrichtung versehen ist.